# EUROPEAN PATENT APPLICATION

(11) **EP 4 773 375 A1**
(43) Date of publication of application: **08.07.2026**
(21) Application number: 25738908.0
(22) Date of filing: 07.01.2025
(51) Int. Cl.: H01M 50/258, H01M 50/204, H01M 50/262, H01M 50/289, H01M 50/691, H01M 50/251

(54) **BATTERY PACK AND ENERGY STORAGE APPARATUS**

(30) Priority: 12.01.2024 KR 20240005423
(71) Applicant: LG Energy Solution, Ltd., Seoul 07335 (KR)
(72) Inventor: KIM, Minju, Daejeon 34122 (KR); LEE, Dong Geun, Daejeon 34122 (KR); JEONG, Gyeongsu, Daejeon 34122 (KR); LEE, Seongju, Daejeon 34122 (KR)
(74) Representative: Plasseraud IP
(86) International application number: PCT/KR2025/000293
(87) International publication number: WO 2025/150834

(57) **Abstract**

A battery pack according to certain embodiments of the present disclosure may comprise a cell module assembly including a battery cell stack in which a plurality of battery cells are stacked, a lower pack case including a bottom plate that supports a lower part of the cell module assembly and a fixing plate that extends from an edge of the bottom plate toward an upper part, an upper pack case that covers an upper surface, both side surfaces, and a rear surface of the cell module assembly and couples with the lower pack case, a lower fixing part that is formed on the fixing plate of the lower pack case, and an upper fixing part that is formed on the upper pack case, and at least partially overlaps with the lower fixing part to be fixed to each other when the lower pack case and the upper pack case are assembled.

## Description

### [TECHNICAL FIELD]

### Cross-Reference to Related Application(s)

This application claims priority to and the benefit of Korean Patent Application No. KR10-2024-0005423, filed on January 12, 2024, with the Korean Intellection Property Office, the content of which is incorporated herein by reference in its entirety.

The present disclosure relates to a battery pack and an energy storage system, and more particularly, to a battery pack and an energy storage system, which can minimize an assembly tolerance when assembling a battery pack case, and also increase energy density.

### [BACKGROUND ART]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Thus, the necessity to develop the secondary batteries is increasing.

Currently commercialized secondary batteries include a nickel cadmium battery, a nickel hydrogen battery, a nickel zinc battery, and a lithium secondary battery. Among these batteries, the lithium secondary battery has come into the spotlight because it has advantages, for example, being freely charged and discharged, and having very low self-discharge rate and high energy density.

Such secondary batteries are widely used in not only small devices such as portable electronic devices, but also medium- and large-scale devices such as electric vehicles and energy storage system (ESS), and the use frequency thereof is rapidly increasing. Furthermore, in recent years, there is an increasing tendency to use residential battery packs for the purpose of storing electricity.

Generally, when manufacturing the parts, the dimensional deviation of the parts, i.e., a part tolerance, occurs due to various factors such as machine precision, materials, and temperature. In addition, when multiple parts are assembled together, not only the environmental factors such as the material and temperature of the produced parts, but also the part tolerance of respective parts accumulate, so that the deviation in the assembling dimension of the parts, i.e., the assembly tolerance, occurs.

Therefore, research is being conducted on methods that can minimize an assembly tolerance when assembling a battery pack case and also increase energy density of a battery pack and/or an energy storage system (ESS).

### [DETAILED DESCRIPTION OF THE INVENTION]

### [Technical Problem]

Therefore, it is an object of the present disclosure to provide a battery pack and an energy storage system, which can minimize an assembly tolerance when assembling a battery pack case, and also increase energy density.

However, the technical objects to be solved by embodiments of the present disclosure are not limited to the above-mentioned objects, and can be variously expanded within the scope of the technical idea included in the present disclosure.

### [Technical Solution]

According to certain aspects of the present disclosure, there is provided a battery pack which may comprise a cell module assembly including a battery cell stack in which a plurality of battery cells are stacked, a lower pack case including a bottom plate that supports a lower part of the cell module assembly and a fixing plate that extends from an edge of the bottom plate toward an upper part, an upper pack case that covers an upper surface, both side surfaces, and a rear surface of the cell module assembly and couples with the lower pack case, a lower fixing part that is formed on the fixing plate of the lower pack case, and an upper fixing part that is formed on the upper pack case, and at least partially overlaps with the lower fixing part to be fixed to each other when the lower pack case and the upper pack case are assembled.

The upper fixing part may comprise a first upper overlapping part that overlaps with the lower fixing part on either of an inner surface and an outer surface of the lower fixing part, and a second upper overlapping part that overlaps with the lower fixing part on the other of the inner surface and the outer surface of the lower fixing part.

The second upper overlapping part may be formed by being recessed inwardly from the first upper overlapping part.

The first upper overlapping part may be formed by being recessed inwardly from the upper pack case, and at least a part of the upper pack case may be separated from the lower pack case by a predetermined distance.

An inner surface of the first upper overlapping part may mutually overlap with the outer surface of the lower fixing part, and an outer surface of the second upper overlapping part may mutually overlap with the inner surface of the lower fixing part.

The upper fixing part further comprises an upper cut-out part formed by cutting out a part of a connection site between the first upper overlapping part and the second upper overlapping part toward the upper part, and a connecting part formed on a remaining portion of the connection site so as to connect the first upper overlapping part and the second upper overlapping part, and wherein when the lower pack case and the upper pack case are assembled, the lower fixing part may be inserted into the upper cut-out part.

The lower fixing part may comprise a lower cut-out part formed by cutting out toward the lower part, and when the lower pack case and the upper pack case are assembled, the upper cut-out part and the lower cut-out part may be inserted into each other.

The upper fixing part may intersect the lower fixing part at the lower cut-out part.

The lower fixing part may intersect the upper fixing part at the upper cut-out part.

A width of the lower cut-out part may be greater than or equal to a width of the connection site between the first upper overlapping part and the second upper overlapping part.

The upper fixing part may further comprise a guide part that is formed at a terminal end part facing the lower pack case from the second upper overlapping part, and is inclined in the inward direction.

The battery pack may further comprise a fixing member that passes through a portion where the lower fixing part and the upper fixing part overlap with each other and fixes the lower pack case and the upper pack case to each other.

The battery pack may further comprises an insulating sheet disposed between the cell module assembly and the upper pack case, wherein the upper pack case may be coupled to the lower pack case in a state that the cell module assembly is covered by the insulating sheet.

The insulating sheet may cover the upper part, both of the side surfaces, and the rear surface of the cell module assembly so that interference does not occur between the upper pack case and the cell module assembly when the lower pack case and the upper pack case are assembled.

The cell module assembly may further comprise a pair of end plates disposed on both side ends of the battery cell stack, and at least one strap that connects between the pair of end plates, and the lower pack case may comprise a drain hole formed in a first area corresponding to a portion where the at least one strap is disposed.

The drain hole may comprise a plurality of drain holes arranged along an extension direction of the at least one strap.

The lower pack case may further comprise a plurality of protrusions for separating between the cell module assembly and the drain hole.

The plurality of protrusions may be formed in a second area other than the first area in the lower pack case.

According to certain other aspects of the present disclosure, there is provided an energy storage system that may comprise a battery pack according to the above mentioned embodiments.

### [Advantageous Effects]

A battery pack and an energy storage system according to certain embodiments of the present disclosure can minimize an assembly tolerance when assembling a battery pack case, and also can maximize a space efficiency inside the battery pack case to increase the energy density. Thereby, it is possible to improve the quality of the battery pack and the energy storage system.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a perspective view showing a battery pack according to an embodiment of the present disclosure.
FIG. 2 is an exploded perspective view of the battery pack of FIG. 1.
FIG. 3 is a perspective view showing a cell module assembly of the battery pack of FIG. 2.
FIG. 4 is a perspective view showing only the upper pack case and the lower pack case in the battery pack of FIG. 2.
FIG. 5 is an enlarged perspective view of a portion A of FIG. 4.
FIG. 6 is an enlarged side view of a portion A of FIG. 4.
FIG. 7 is an enlarged bottom view of a portion A of FIG. 4.
FIG. 8 is an enlarged perspective view of a portion B of FIG. 4.
FIG. 9 is an exterior perspective view of the portion where the upper pack case and the lower pack case are coupled.
FIG. 10 is an interior perspective view of the portion where the upper pack case and the lower pack case are coupled.
FIG. 11 is a cross-sectional view taken along the C-C direction of FIG. 9.
FIG. 12 is a perspective view showing a form in which an upper pack case and a lower pack case are assembled in a battery pack according to an embodiment of the present disclosure.
FIG. 13 is an exploded perspective view showing a lower pack case and a cell module assembly in a battery pack according to an embodiment of the present disclosure in downward direction.
FIG. 14 is an exploded perspective view showing an area where a strap of the cell module assembly shown in FIG. 13 is disposed in the lower pack case.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is arranged "on" a specific part, the description includes not only a case where the layer, film, region, plate or the like is arranged "directly on" the specific part, but also a case where the layer, film, region, plate or the like is arranged on the specific part via another part. When a part is arranged "directly on" another part, this indicates that no new component is present between the two parts. Further, when a component is arranged "on" a reference part, this indicates that the component is present at the top of or under the reference part, and does not necessarily indicate that the component is arranged only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

Now, specific embodiments of the present disclosure will be described with reference to the accompanying drawings.

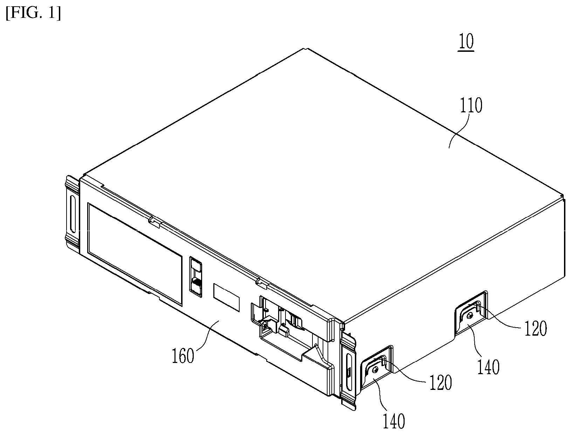

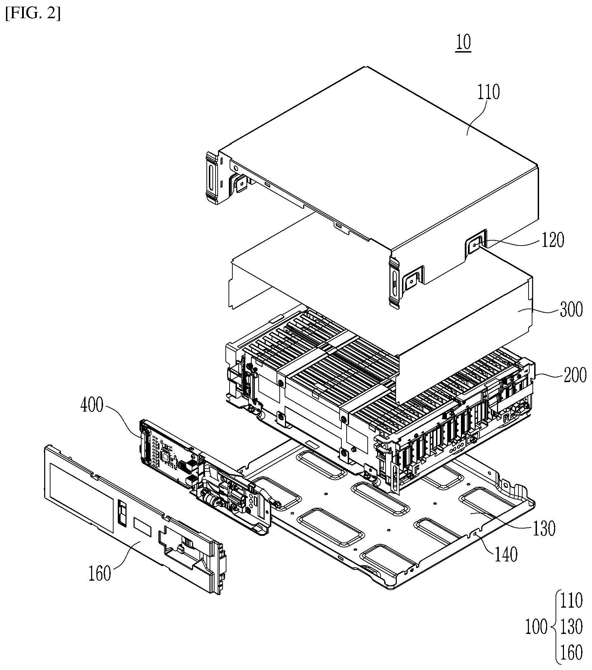

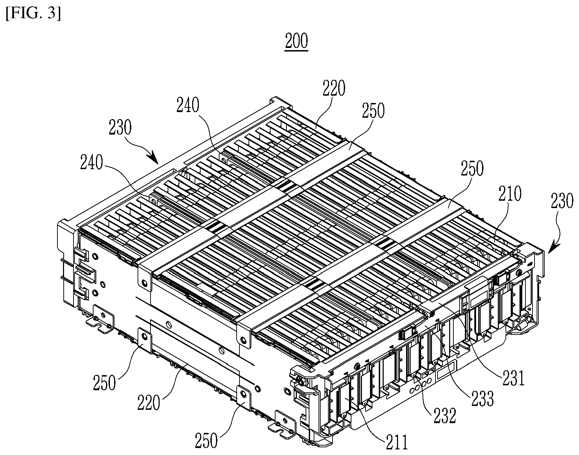

FIG. 1 is a perspective view showing a battery pack according to an embodiment of the present disclosure. FIG. 2 is an exploded perspective view of the battery pack of FIG. 1. FIG. 3 is a perspective view showing a cell module assembly of the battery pack of FIG. 2.

The battery pack 10 includes a pack case 100, a cell module assembly 200, an insulating sheet 300, and an electrical unit 400, and the cell module assembly 200 and the electrical unit 400 are stored inside the pack case 100.

The pack case 100 includes an upper pack case 110, a lower pack case 130, a fixing member 150 that fixes the upper pack case 110 and the lower pack case 130 to each other, and a front cover 160. The lower pack case 130 and the upper pack case 110 are coupled to surround the outside of the cell module assembly 200. For example, the upper pack case 110 may basically be in the form of a U-shaped frame with its rear surface closed. For example, the lower pack case 130 may have an approximately flat plate shape. The cell module assembly 200 may be seated on the lower pack case 130 having the flat plate shape, and the upper pack case 110 may be structured to cover the cell module assembly 200.

However, the present disclosure is not limited to those described above, and various modifications and variations are possible, such as the lower pack case 130 and the upper pack case 110 each being an L-shaped frame or a roll press type mono frame.

Further, the front cover 160 is a member disposed on the front surface of the cell module assembly 200. Hereinafter, based on a direction parallel with the direction in which the battery cells 210 of the cell module assembly 200 are stacked, one surface on which the electrical unit 400 including the BMS, etc. is mounted is referred to as a front side, and the other surface is referred to as a rear side.

Meanwhile, a detailed description of the fixing member 150 will be given later.

The cell module assembly 200 includes a battery cell stack, an end plate 220, and a busbar housing assembly 230. The cell module assembly may further include a blocking member 240. The battery cell stack may be formed by stacking a plurality of battery cells 210.

A pair of end plates 220 are respectively provided on both side ends of the battery cell stack, i.e., on the outermost side of the battery cell stack. The end plates 220 are disposed side by side in parallel to the battery cells 210. In addition, a pair of busbar housing assemblies 230 are disposed on the surfaces toward which the electrode leads 211 of the respective battery cells 210 of the battery cell stack are directed. In the exemplary embodiment of FIG. 3, a pair of busbar housing assemblies 230 are disposed on both side surfaces of a plurality of battery cell stacks. Each of the busbar housing assemblies 230 is disposed in a direction orthogonal to the longitudinal direction of the battery cell 210. Further, a pair of end plates 220 are disposed on the front surface and rear surface of the battery cell stack, respectively. Each of the opposite ends between the pair of busbar housing assemblies 230 is connected by a pair of end plates 220, respectively.

The end plate 220 may be made of, for example, a metal material, and specifically, it may made of, for example, aluminum, iron, or stainless steel, or the like. The busbar housing assembly 230 includes a busbar housing 231 in which a busbar electrode 232 and an ICB (Inter Connector Board) 233 is disposed, wherein the busbar housing 231 may be made of, for example, a plastic material, and may be manufactured by plastic injection molding.

A busbar electrode 232 is disposed on an outer surface of the busbar housing 231, which includes a plurality of openings near the position at which the busbar electrode 232 is disposed. The electrode lead 211 of the battery cell 210 passes through the opening of the busbar housing assembly 230 to be coupled to the busbar electrode 232. For reference, in the figures of the present disclosure, the respective electrode leads 211 of adjacent battery cells 210 are coupled to each other through an opening formed in the busbar housing 231, and the busbar electrode 232 is coupled thereon.

Further, an ICB 233 is disposed on the outer surface of the busbar housing 231. In an embodiment of the present disclosure, the ICB 233 is disposed on the upper part of the busbar electrode 232.

The ICB 233 transmits sensing data between the battery cell 210 and the BMS of the electrical unit 400. The ICB 233 is a board equipped with at least one element so as to transmit sensing data, and may include a printed circuit board (PCB) having a circuit pattern formed on an insulating layer, and a sensing cable connector to which a sensing cable is connected. The ICB 233 senses the current and/or voltage in the battery cell 210 and transmits the sensed data to the BMS through a sensing cable. Further, data for maintaining and managing the battery cell 210 in the BMS is transmitted to the ICB 233 via the sensing cable, and ultimately, the battery cell 210 electrically connected to the ICB 233 is controlled. In more detail, data regarding current and/or voltage in the battery cell 210 via the electrode lead 211 of the battery cell 210 is transmitted to the printed circuit board of the ICB 233 through the busbar electrode 232 coupled to the electrode lead 211.

Meanwhile, in the above-described embodiments, a case has been described as an example in which electrode leads 211 are respectively provided on both sides of the battery cell 210, and a pair of busbar housing assemblies 230 are respectively provided on both ends of the battery cell stack, but the present disclose is not limited to those described above. This is also applicable to the case where all the electrode leads 211 are provided on one side of the battery cells 210 and the busbar housing assembly 230 is disposed at one end of the battery cell stack, i.e., at one end to which the electrode leads 211 face.

The blocking member 240 is disposed in contact with a large area of the battery cell 210, and the blocking member 240 is disposed between adjacent battery cells 210 and/or between the outermost battery cell 210 of the battery cell stack and the end plate 220. The blocking member 240 can block flames or sparks emitted from a battery cell 210 in which a thermal event has occurred from propagating to adjacent battery cells 210, thereby preventing a thermal runaway between the cells. The blocking member 240 may be disposed between a plurality of battery cells 210. In one embodiment, FIG. 3 illustrates a case where a blocking member 240 is disposed for every six battery cells 210. However, the embodiments of the present disclosure are not limited to those shown in the figure, and various modifications and variations are possible.

The blocking member 240 has an approximately plate-like shape. The blocking member 240 includes a support plate and a swelling pad. A plurality of blocking member 240 may be included depending on the number of battery cells 210. As described above, the blocking member 240 may be stacked together with the battery cells 210 to form the cell module assembly 200.

The support plate may be made of, for example, a metal material, a plastic material, or a combination thereof. The metal material may be made of, for example, aluminum, iron, stainless steel, or a combination thereof. The plastic material may be made of, for example, a high-strength plastic such as reinforced plastic.

The outermost surface of the blocking member 240 includes a pair of swelling pads. The swelling pads may be made of silicone, plastic, or a combination thereof. In the case of a plastic material, it may be made of, for example, a soft plastic, for example, polyurethane foam (PU foam). The swelling pads may act as a buffer when the battery cell 210 is swollen.

Meanwhile, the cell module assembly 200 may include at least one strap 250, but the details thereof will be described below.

The insulating sheet 300 is disposed between the cell module assembly 200 and the upper pack case 110 and has electrical insulation properties. The insulating sheet 300 may be, for example, a film made of PC (polycarbonate), PET, PP, or a combination thereof. Meanwhile, although not shown in FIG. 2, an insulating sheet may also be provided between the cell module assembly 200 and the lower pack case 130.

The electrical unit 400 is disposed on one surface of the cell module assembly 200 (i.e., the front surface of the cell module assembly 200). The example of FIG. 2 illustrates a case where the electrical unit 400 is disposed on the outer surface of the end plate 220 disposed on the front surface of the cell module assembly 200. The electrical unit 400 may include a BMS, an electrical unit housing that stores each component (e.g., a BMS, a power cable, etc.), and a power cable. The BMS includes a connector terminal so as to be electrically connected to the sensing cable. The electrical unit 400 may also include various components for controlling or managing the charging and discharging of the battery pack, such as a relay, a fuse, and a current sensor. Since each component of the electrical unit 400 may be implemented by employing an electrical unit equipped in a typical battery pack, a more detailed description of the electrical unit 400 will be omitted.

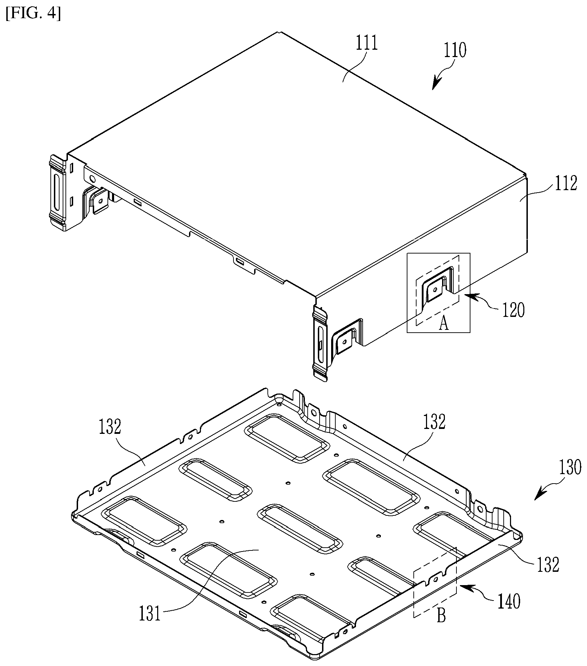

FIG. 4 is a perspective view showing only the upper pack case and the lower pack case in the battery pack of FIG. 2.

Referring to FIG. 4, the upper pack case 110 may include an upper plate 111 covering the upper surface of the cell module assembly 200, and a side plate 112 extending from the edge of the upper plate 111 toward the lower part so as to cover both side surfaces and the rear surface of the cell module assembly 200. The front surface of the upper pack case 110 may have the open form. The lower pack case 130 may include a bottom plate 131 supporting the lower part of the cell module assembly 200, and a fixing plate 132 extending from the edge of the bottom plate 131 toward the upper part.

The upper pack case 110 is coupled with the lower pack case 130 to form a storage space in which the cell module assembly 200 is stored. More specifically, the side plate 112 of the upper pack case 110 and the fixing plate 132 of the lower pack case 130 can be coupled with each other. For this purpose, an upper fixing part 120 can be formed on the side plate 112 of the upper pack case 110, and a lower fixing part 140 can be formed on the fixing plate 132 of the lower pack case 130. When the upper pack case 110 and the lower pack case 130 are assembled, the upper fixing part 120 can at least partially overlap with the lower fixing part 140, and the upper fixing part 120 and the lower fixing part 140 can be fixed to each other.

At this time, the description "the upper fixing part 120 and the lower fixing part 140 can overlap each other" means that at least a part of the surface of the upper fixing part 120 and at least a part of the surface of the lower fixing part 140 are coupled in a stacked form while being in contact with each other. The detailed configurations of the upper fixing part 120 and the lower fixing part 140 will be described below with reference to the drawings.

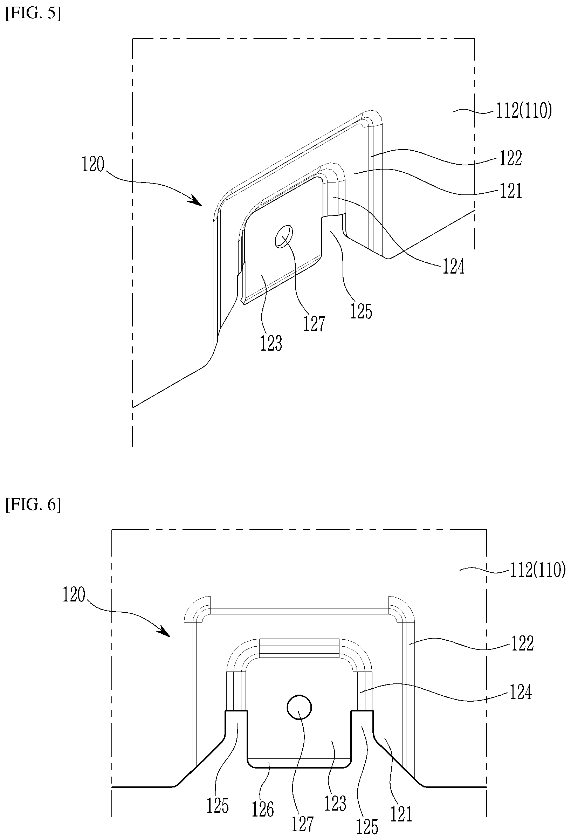

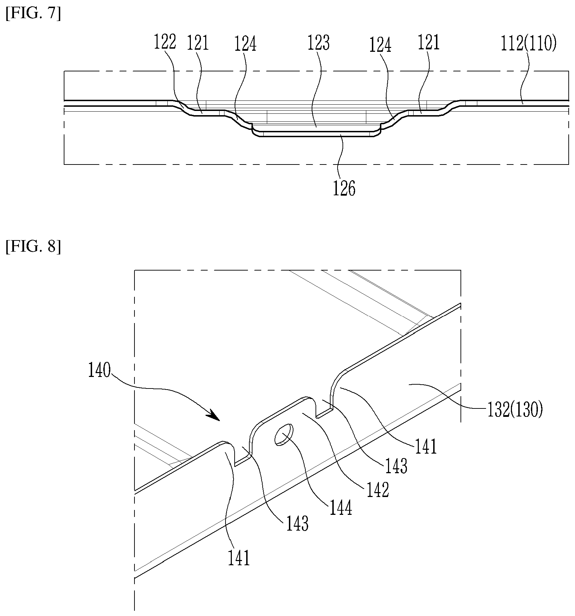

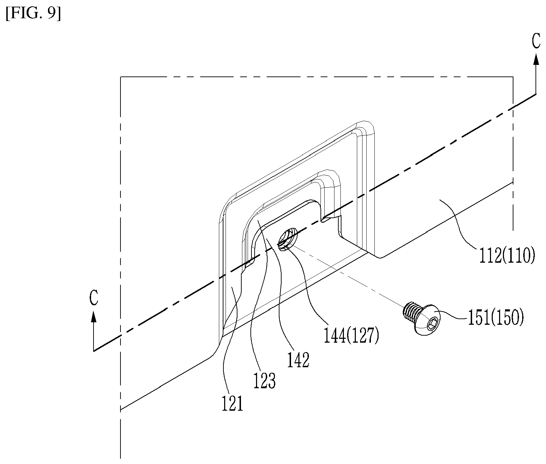

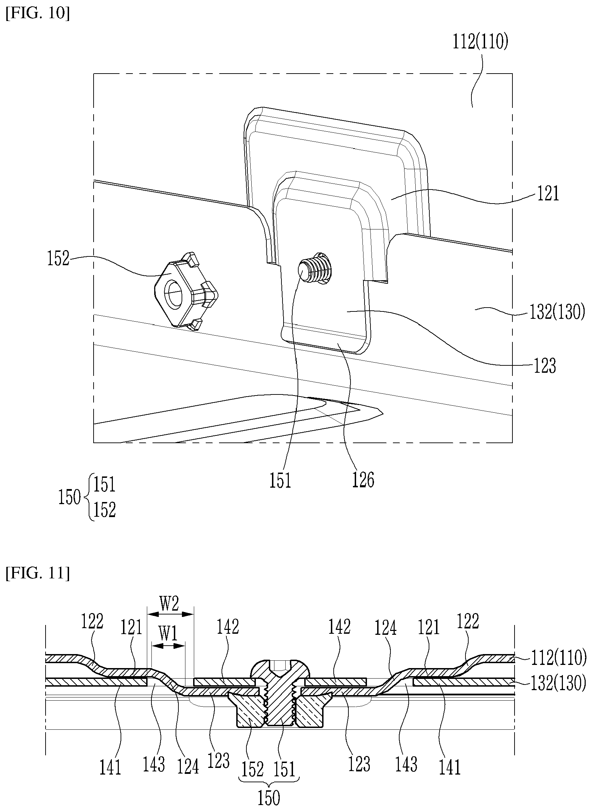

FIG. 5 is an enlarged perspective view of a portion A of FIG. 4. FIG. 6 is an enlarged side view of a portion A of FIG. 4. FIG. 7 is an enlarged bottom view of a portion A of FIG. 4. FIG. 8 is an enlarged perspective view of a portion B of FIG. 4. FIG. 9 is an exterior perspective view of the portion where the upper pack case and the lower pack case are coupled. FIG. 10 is an interior perspective view of the portion where the upper pack case and the lower pack case are coupled. FIG. 11 is a cross-sectional view taken along the C-C direction of FIG. 9.

First, referring to FIGS. 5 to 7, 9 and 10, the upper fixing part 120 may include a first upper overlapping part 121, a second upper overlapping part 123, a connecting part 124, an upper cut-out part 125 and a guide part 126.

The upper pack case 110 and the lower pack case 130 can be assembled so that one of the inner and outer surfaces of the first upper overlapping part 121 overlaps with the inner surface of the first lower overlapping part 141, and the other of the inner and outer surfaces of the second upper overlapping part 123 overlaps with the outer surface of the second lower overlapping part 142.

Specifically, the first upper overlapping part 121 is formed by being recessed inwardly from the upper pack case 110, and is a flat portion that can overlap with the lower fixing part 140 on the outer surface of the lower fixing part 140. An inclined surface 122 that is inclined inwardly from the upper pack case 110 is formed at a connection site between the first upper overlapping part 121 and the upper pack case 110. Since the first upper overlapping part 121 recessed inwardly from the upper pack case 110 comes into contact with the outer surface of the lower fixing part 140 formed in the lower pack case 130, at least a part of the upper pack case 110 can be separated from the lower pack case 130 by a predetermined distance.

The space formed by separating the upper pack case 110 and the lower pack case 130 by a predetermined distance can function as a ventilation port through which air circulates. As a result, the heat generated in the battery cells 210 of the cell module assembly 200 stored inside the pack case 100 can be cooled by the air flowing into the inside of the pack case 100 through the separation space, and the air that has absorbed the heat inside the pack case 100 can be discharged to the outside through the separation space.

The second upper overlapping part 123 is formed by being recessed inwardly from the first upper overlapping part 121, and is a flat portion that can overlap with the lower fixing part 140 on the inner surface of the lower fixing part 140. A connecting part 124 and an upper cut-out part 125 are formed at the connection site between the first upper overlapping part 121 and the second upper overlapping part 123. First, the upper cut-out part 125 is a portion formed by cutting out a part of the connection site between the first upper overlapping part 121 and the second upper overlapping part 123 toward the upper part. The connecting part 124 is a portion formed on the remainder of the connection site between the first upper overlapping part 121 and the second upper overlapping part 123. The connecting part 124 connects the first upper overlapping part 121 and the second upper overlapping part 123, and is inclined inwardly from the first upper overlapping part 121. As shown in FIGS. 9 and 10, when the upper pack case 110 and the lower pack case 130 are assembled, the lower fixing part 140 can be inserted into the upper cut-out part 125. Meanwhile, a more detailed description of the coupling of the upper fixing part 120 and the lower fixing part 140 will be given later.

The guide part 126 is formed at a terminal end part of the second upper overlapping part 123 toward the lower pack case 130. The guide part 126 is inclined inwardly from the second upper overlapping part 123. When the upper pack case 110 and the lower pack case 130 are assembled, the lower fixing part 140 can move along the guide part 126 to the outer surface of the second upper overlap part 123. That is, the guide part 126 can guide the lower fixing part 140 so that the second upper overlapping part 123 can overlap with the lower fixing part 140 on the inner surface of the lower fixing part 140.

Meanwhile, the inside direction described above refers to the direction from the pack case 100 toward the inner space in which the cell module assembly 200 is stored, and the outside direction refers to the direction from the pack case 100 toward the outside. In addition, the inner surface and the outer surface refer to the surface of a member that faces the inner space and the surface of a member that faces the outside, respectively.

Referring to FIGS. 8 to 10, the lower fixing part 140 includes a first lower overlapping part 141, a second lower overlapping part 142, and a lower cut-out part 143 formed by cutting out toward the lower part between the first lower overlapping part 141 and the second lower overlapping part 142.

When the upper pack case 110 and the lower pack case 130 are assembled, the first lower overlapping part 141 is a portion that mutually overlaps with the first upper overlapping part 121, and the second lower overlapping part 142 is a portion that mutually overlaps with the second upper overlapping part 123. More specifically, the outer surface of the first lower overlapping part 141 and the inner surface of the first upper overlapping part 121 overlap with each other, and the inner surface of the second lower overlapping part 142 and the outer surface of the second upper overlapping part 123 overlap with each other.

Referring to FIGS. 9 to 11, when the upper pack case 110 and the lower pack case 130 are assembled, the upper cut-out part 125 and the lower cut-out part 143 are inserted relative to each other. Thereby, the upper fixing part 120 can intersect the lower fixing part 140 at the lower cut-out part 143. More specifically, when the upper cut-out part 125 and the lower cut-out part 143 are inserted relative to each other, the upper fixing part 120 can intersect the lower fixing part 140 at the lower cut-out part 143. Further, the lower fixing part 140 can intersect the upper fixing part 120 at the lower cut-out part 143.

The upper fixing part 120 forms an inclined surface 122 at the connection site between the first upper overlapping part 121 and the second upper overlapping part 123. The inclined surface 122 intersects the lower fixing part 140 at the lower cut-out part 143. Therefore, in order for the first upper overlapping part 121 and the second upper overlapping part 123 to stably overlap with the first lower overlapping part 141 and the second lower overlapping part 142, the width W2 of the lower cut-out part 143 may be greater than or equal to the width W1 of the connection site between the first upper overlapping part 121 and the second upper overlapping part 123. At this time, the width W2 of the lower cut-out part 143 described above and the width W1 of the connection site between the first upper overlapping part 121 and the second upper overlapping part 123 mean the length in the direction parallel to the stacking direction of the battery cell 210 when viewed from the side of the cell module assembly 200.

The fixing member 150 can pass through the portion where the upper fixing part 120 and the lower fixing part 140 overlap each other, and thus fix the upper pack case 110 and the lower pack case 130 to each other. Specifically, the upper fixing part 120 includes an upper through hole 127 formed in the second upper overlapping part 123, and the lower fixing part 140 includes a lower through hole 144 formed in the second lower overlapping part 142. When the first upper overlapping part 121 and the second upper overlapping part 123 of the upper fixing part 120 and the first lower overlapping part 141 and the second lower overlapping part 142 of the lower fixing part 140 overlap each other, the upper through hole 127 and the lower through hole 144 are aligned with each other, and the fixing member 150 passes through the upper through hole 127 and the lower through hole 144 to fix the upper fixing part 120 and the lower fixing part 140.

The fixing member 150 may include a bolt 151 passing through the upper through hole 127 and the lower through hole 144, and a nut 152 fastened to the bolt 151. However, the type of the fixing member 150 is not limited to those described above, and various changes and modifications are possible as long as it is a fixing means capable of fixing the portion where the upper fixing part 120 and the lower fixing part 140 overlap with each other.

According to some embodiments of the present disclosure, in a state that the upper fixing part 120 intersects the lower fixing part 140, the portion where the upper fixing part 120 and the lower fixing part 140 overlap with each other can be fixed by the fixing member 150, it is possible to reduce the fixing point in comparison with a general fixing method in which the upper pack case and the lower pack case are fixed only via the fixing member.

In addition, the upper fixing part 120 includes a first upper overlapping part 121 and a second upper overlap part 123 that are recessed inwardly, and therefore, even if a part tolerance occur, the assembly tolerance when assembling the upper pack case 110 and the lower pack case 130 can be minimized. That is, the upper pack case 110 and the lower pack case 130 can be fabricated from a material that has rigidity but can be elastically deformed. As shown in FIG. 11, there is a space separated by a predetermined distance between the upper pack case 110 and the lower pack case 130, and therefore, even if a part tolerance occurs, the upper pack case 110 and the lower pack case 130 can be elastically deformed to some extent to reduce the assembly tolerance.

In addition, the assembly of the upper fixing part 120 can be guided through the guide part 126 formed in the second upper overlapping part 123 of the upper fixing part 120, and therefore, even if a part tolerance occurs in the upper pack case 110, the upper pack case 110 and the lower pack case 130 can be easily assembled.

Meanwhile, since the first upper overlapping part 121 and the second upper overlapping part 123 of the upper fixing part 120 are formed by being recessed to the inner side, the inner surface of the first upper overlapping part 121 mutually overlaps with the outer surface of the first lower overlapping part 141, and the outer surface of the second upper overlapping part 123 mutually overlaps with the inner surface of the second lower overlapping part 142, but is not limited by those described above. For example, the first upper overlapping part 121 and the second upper overlapping part 123 of the upper fixing part 120 may be formed by being protruded to the outer side. Alternatively, the first upper overlapping part 121 of the upper fixing part 120 may be formed by being recessed to the inner side, and the second upper overlap part 123 may be formed by being protruded to the outer side.

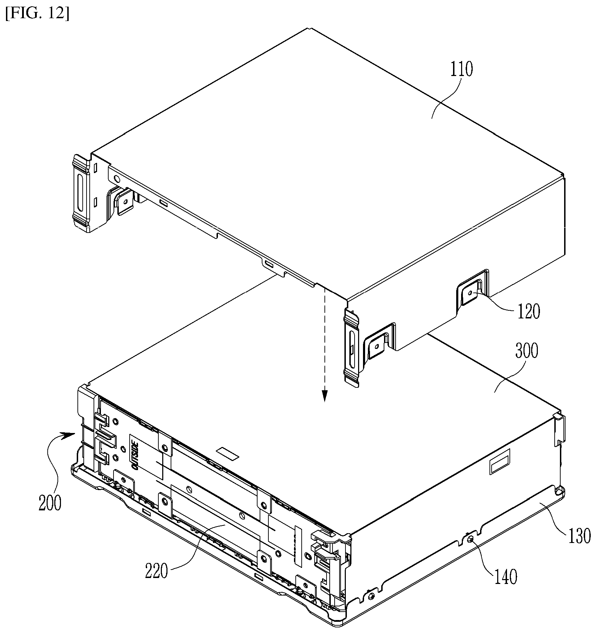

FIG. 12 is a perspective view showing a form in which an upper pack case and a lower pack case are assembled in a battery pack according to an embodiment of the present disclosure.

Referring to FIG. 12, the insulating sheet 300 is disposed between the cell module assembly 200 and the upper pack case 110. The upper pack case 110 is coupled to the lower pack case 130 while the cell module assembly 200 is covered by the insulating sheet 300. Referring again to FIG. 2, the electrical unit 400 is mounted on the front surface of the cell module assembly 200, and various components for connecting the cell module assembly 200 and the electrical unit 400 can be disposed. For example, the sensing cable can be disposed to extend along the side surface of the cell module assembly 200. If the upper pack case 110 and the lower pack case 130 are coupled in a state that the cell module assembly 200 is not covered by the insulating sheet 300, there may be a problem of interference, such as interference of various parts disposed on the outside of the cell module assembly 200, especially on the side face of the cell module assembly 200, by the upper fixing part 120 formed by being recessed inwardly from the upper pack case 110, which may cause damage to the parts.

Therefore, when the upper pack case 110 and the lower pack case 130 are assembled, the insulating sheet 300 can cover an upper part, both side surface and a rear surface of the cell module assembly 200 so that interference does not occur between the upper fixing part 120 of the upper pack case 110 and the cell module assembly 200. The upper pack case 110 can be coupled to the lower pack case 130 in a state that the cell module assembly 200 is covered by the insulating sheet 300.

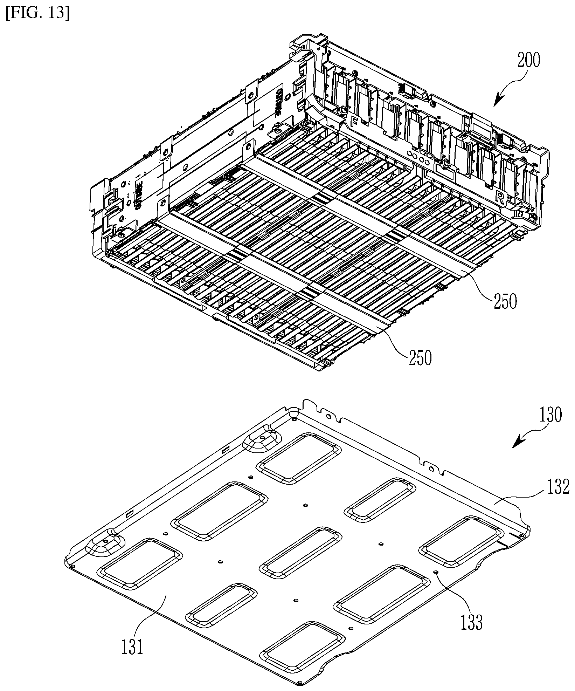

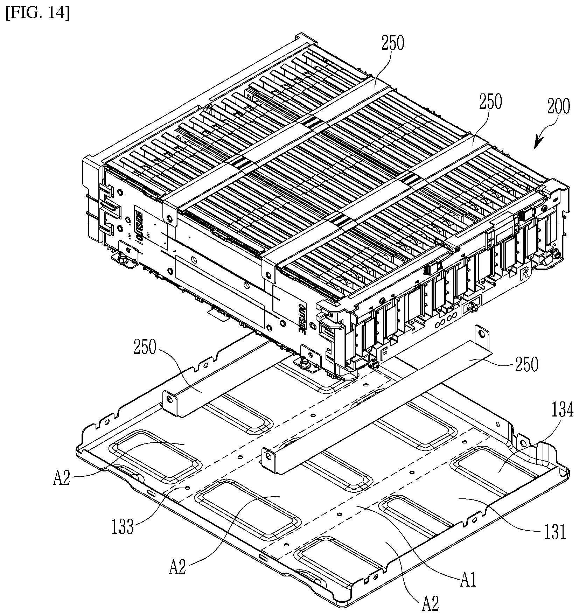

FIG. 13 is an exploded perspective view showing a lower pack case and a cell module assembly in a battery pack according to an embodiment of the present disclosure in downward direction. FIG. 14 is an exploded perspective view showing an area where a strap of the cell module assembly shown in FIG. 13 is disposed in the lower pack case.

Referring to FIGS. 13 and 14, the cell module assembly 200 includes a pair of end plates 220 disposed on both side ends of the battery cell stack, and at least one strap 250 connecting the pair of end plates 220. The at least one strap 250 can connect the pair of end plates 220 on each of the upper side and the lower side of the cell module assembly 200. At least one strap 250 connects between the pair of end plates 220, thereby strengthening the binding of the cell module assembly 200. More specifically, at least one strap 250 strengthens the binding of the pair of end plates 220 and the plurality of battery cell stacks disposed therebetween. Accordingly, it is possible to prevent the alignment of the plurality of battery cell stacks from being distorted by means of the at least one strap 250.

The lower pack case 130 includes a drain hole 133 for discharging moisture in the internal space of the pack case 100 to the outside of the pack case 100. The drain hole 133 may be a passage formed by passing through the bottom plate 131 of the lower pack case 130. At least one drain hole 133 may be provided, and preferably, a plurality of drain holes may be provided to facilitate the discharge of moisture.

When the cell module assembly 200 is seated on the lower pack case 130, the drain hole 133 can be formed in the first area A1 corresponding to the portion where at least one strap 250 connected to the cell module assembly 200 is disposed. When a plurality of drain holes 133 are formed, the plurality of drain holes 133 can be arranged along the extension direction of at least one strap 250 in the first area A1. Since the drain hole 133 is formed in the first area A1 corresponding to the portion where at least one strap 250 is disposed, the cell module assembly 200 can be prevented from being directly exposed to the outside. Therefore, the cell module assembly 200 can be prevented from coming into direct contact with external foreign substances through the drain hole 133.

The lower pack case 130 includes a plurality of protrusions 134 for separating between the cell module assembly 200 and the drain hole 133. The drain hole 133 is formed corresponding to a portion where at least one strap 250 of the cell module assembly 200 is disposed, and therefore, if the bottom plate 131 of the lower pack case 130 and the cell module assembly 200 are not separated, the drain hole 133 may be blocked by the strap 250 of the cell module assembly 200. If the drain hole 133 is blocked by the strap 250, there may be a problem in that moisture inside the pack case 100 is hard to discharge.

In order to prevent such problems, a plurality of protrusions 134 may be formed on the lower pack case 130. Further, in order to facilitate drainage by the drain hole 133, a plurality of protrusions 134 may be formed in the second area A2 other than the first area A1 in the lower pack case 130. That is, since a protruding portion is not formed on the first area A1 where the drain hole 133 is formed in the lower pack case 130, a drain path through which moisture is discharged can be formed.

According to certain other embodiments of the present disclosure, there is provided an energy storage system (ESS) comprising one or more battery packs 10 according to some embodiments of the present disclosure described above. In addition, Further, the energy storage system according to an embodiment of the present disclosure may further include general components included in an energy storage system in addition to the battery pack 10.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

10: battery pack
100: pack case
110: upper pack case
120: upper fixing part
130: lower pack case
140: lower fixing part
150: fixing member
160: front cover
200: cell module assembly
210: battery cell
220: end plate
230: busbar housing assembly
231: busbar housing
232: busbar electrode
233: ICB (Inter Connector Board)
240: blocking member
250: strap
300: insulating sheet
400: electrical unit

## Claims

1. A battery pack comprising:
a cell module assembly including a battery cell stack in which a plurality of battery cells are stacked;
a lower pack case including a bottom plate that supports a lower part of the cell module assembly and a fixing plate that extends from an edge of the bottom plate toward an upper part;
an upper pack case that covers an upper surface, both side surfaces, and a rear surface of the cell module assembly and couples with the lower pack case;
a lower fixing part that is formed on the fixing plate of the lower pack case; and
an upper fixing part that is formed on the upper pack case, and at least partially overlaps with the lower fixing part to be fixed to each other when the lower pack case and the upper pack case are assembled.

2. The battery pack according to claim 1, wherein the upper fixing part comprises:
a first upper overlapping part that overlaps with the lower fixing part on either of an inner surface and an outer surface of the lower fixing part; and
a second upper overlapping part that overlaps with the lower fixing part on the other of the inner surface and the outer surface of the lower fixing part.

3. The battery pack according to claim 2, wherein the second upper overlapping part is formed by being recessed inwardly from the first upper overlapping part.

4. The battery pack according to claim 3, wherein the first upper overlapping part is formed by being recessed inwardly from the upper pack case, and
at least a part of the upper pack case is separated from the lower pack case by a predetermined distance.

5. The battery pack according to claim 4, wherein an inner surface of the first upper overlapping part mutually overlaps with the outer surface of the lower fixing part, and an outer surface of the second upper overlapping part mutually overlaps with the inner surface of the lower fixing part.

6. The battery pack according to claim 3, wherein the upper fixing part further comprises,
an upper cut-out part formed by cutting out a part of a connection site between the first upper overlapping part and the second upper overlapping part toward the upper part; and
a connecting part formed on a remaining portion of the connection site so as to connect the first upper overlapping part and the second upper overlapping part, and
wherein when the lower pack case and the upper pack case are assembled, the lower fixing part is inserted into the upper cut-out part.

7. The battery pack according to claim 6, wherein the lower fixing part comprises a lower cut-out part formed by cutting out toward the lower part, and
when the lower pack case and the upper pack case are assembled, the upper cut-out part and the lower cut-out part are inserted relative to each other.

8. The battery pack according to claim 7, wherein the upper fixing part intersects the lower fixing part at the lower cut-out part.

9. The battery pack according to claim 7, wherein the lower fixing part intersects the upper fixing part at the upper cut-out part.

10. The battery pack according to claim 7, wherein a width of the lower cut-out part is greater than or equal to a width of the connection site between the first upper overlapping part and the second upper overlapping part.

11. The battery pack according to claim 3, wherein the upper fixing part further comprises a guide part that is formed at a terminal end part facing the lower pack case from the second upper overlapping part, and is inclined in the inward direction.

12. The battery pack according to claim 1, further comprising a fixing member that passes through a portion where the lower fixing part and the upper fixing part overlap with each other and fixes the lower pack case and the upper pack case to each other.

13. The battery pack according to claim 1, further comprising an insulating sheet disposed between the cell module assembly and the upper pack case,
wherein the upper pack case is coupled to the lower pack case in a state that the cell module assembly is covered by the insulating sheet.

14. The battery pack according to claim 13, wherein the insulating sheet covers the upper part, both of the side surfaces, and the rear surface of the cell module assembly so that interference does not occur between the upper pack case and the cell module assembly when the lower pack case and the upper pack case are assembled.

15. The battery pack according to claim 1, wherein the cell module assembly further comprises,
a pair of end plates disposed on both side ends of the battery cell stack; and
at least one strap that connects between the pair of end plates, and
the lower pack case comprises a drain hole formed in a first area corresponding to a portion where the at least one strap is disposed.

16. The battery pack according to claim 15, wherein the drain hole comprises a plurality of drain holes arranged along an extension direction of the at least one strap.

17. The battery pack according to claim 16, wherein the lower pack case further comprises a plurality of protrusions for separating between the cell module assembly and the drain hole.

18. The battery pack according to claim 17, wherein the plurality of protrusions are formed in a second area other than the first area in the lower pack case.

19. An energy storage system comprising the battery pack according to any one of claims 1 to 18.
